# EUROPEAN PATENT APPLICATION

(11) **EP 2 530 997 A1**
(43) Date of publication of application: **05.12.2012**
(21) Application number: 12003862.5
(22) Date of filing: 16.05.2012
(51) Int. Cl.: H04W 88/18, H04L 1/00, H04N 13/04, H04W 4/18

(54) **Adaptive video encoding based on predicted wireless channel conditions**

(30) Priority: 31.05.2011 US 201161491838 P; 25.09.2011 US 201113244584
(71) Applicant: Broadcom Corporation, Irvine, CA 92617 (US)
(72) Inventor: Agarwal, Peyush, 95035 Milpitas California (US); Rajakarunanayake, Yasantha, 94582 San Ramon California (US); Bennet, James D., 36301 Hroznetin (CZ); Dougherty, James F. III., 95037 Morgan Hill California (US); MacInnis Alexander G., 94022 Los Altos California (US)
(74) Representative: Jehle, Volker Armin

(57) **Abstract**

Adaptive video encoding based on predicted wireless channel conditions. Based on at least one of a number of transmitter side indications of the available throughput of a wireless channel for video delivery, an encoder rate adaptation mechanism generates an estimate of the supportable throughput of the wireless channel under different operating conditions. An encoding parameter, such as encoder bit rate, is subsequently altered based on the estimated throughput value. In one instance, transmitter side throughput indicia is used to generate target encoder bit rates for multiple potential PHY data rates/channel MCS selections that may be used in video delivery. In anticipation of or immediately following a transition to one such PHY data rate/MCS selection, the encoder bit rate is altered in accordance with an associated target bit rate. In another mode, average transmit queue latency information is used to further regulate the encoder bit rate.

## Description

### CROSS REFERENCE TO RELATED PATENTS/PATENT APPLICATIONS

### Provisional Priority Claim

The present U.S. Utility Patent Application claims priority pursuant to 35 U.S.C. § 119(e) to the following U.S. Provisional Patent Application which is hereby incorporated herein by reference in its entirety and made part of the present U.S. Utility Patent Application for all purposes:
1. U.S. Provisional Patent Application Serial No. 61/491,838, entitled "Media communications and signaling within wireless communication systems," (Attorney Docket No. BP22744), filed 05-31-2011, pending.

### Incorporation by Reference

The following U.S. Utility Patent Applications are hereby incorporated herein by reference in their entirety and made part of the present U.S. Utility Patent Application for all purposes:
1. U.S. Utility Patent Application Serial No. _, entitled "Channel Condition Prediction Employing Transmit Queuing Model," (Attorney Docket No. BP22763), filed on the same date herewith, pending, which claims priority pursuant to 35 U.S.C. § 119(e) to the following U.S. Provisional Patent Application which is hereby incorporated herein by reference in its entirety and made part of the present U.S. Utility Patent Application for all purposes:
   1.1. U.S. Provisional Patent Application Serial No. 61/491,838, entitled "Media communications and signaling within wireless communication systems," (Attorney Docket No. BP22744), filed 05-31-2011, pending.
2. U.S. Utility Patent Application Serial No. 13/240,906, entitled "Selective Intra and/or Inter Prediction Video Encoding," (Attorney Docket No. BP22759.1), filed on 09-22-2011, pending, which claims priority pursuant to 35 U.S.C. § 119(e) to the following U.S. Provisional Patent Application which is hereby incorporated herein by reference in its entirety and made part of the present U.S. Utility Patent Application for all purposes:
   2.1. U.S. Provisional Patent Application Serial No. 61/491,838, entitled "Media communications and signaling within wireless communication systems," (Attorney Docket No. BP22744), filed 05-31-2011, pending.
3. U.S. Utility Patent Application Serial No. 13/223,250, entitled "Dynamic Wireless Channel Selection and Protocol Control for Streaming Media," (Attorney Docket No. BP22783), filed on 08-31-2011, pending, which claims priority pursuant to 35 U.S.C. § 119(e) to the following U.S. Provisional Patent Application which is hereby incorporated herein by reference in its entirety and made part of the present U.S. Utility Patent Application for all purposes:
   3.1. U.S. Provisional Patent Application Serial No. 61/491,838, entitled "Media communications and signaling within wireless communication systems," (Attorney Docket No. BP22744), filed 05-31-2011, pending.
4. U.S. Utility Patent Application Serial No. 12/197,781, entitled "Source Frame Adaptation and Matching optimally to Suit a Recipient Video Device", filed on 08-25-2008, pending.

### Incorporation by Reference

The following standards/draft standards are hereby incorporated herein by reference in their entirety and are made part of the present U.S. Utility Patent Application for all purposes:
1. "WD3: Working Draft 3 of High-Efficiency Video Coding, Joint Collaborative Team on Video Coding (JCT-VC)," of ITU-T SG16 WP3 and ISO/IEC JTC1/SC29/WG11, Thomas Wiegand, et al., 5th Meeting: Geneva, CH, 16-23 March, 2011, Document: JCTVC-E603, 215 pages.
2. International Telecommunication Union, ITU-T, TELECOMMUNICATION STANDARDIZATION SECTOR OF ITU, H.264 (03/2010), SERIES H: AUDIOVISUAL AND MULTIMEDIA SYSTEMS, Infrastructure of audiovisual services - Coding of moving video, Advanced video coding for generic audiovisual services, Recommendation ITU-T H.264, also alternatively referred to as International Telecomm ISO/IEC 14496-10 - MPEG-4 Part 10, AVC (Advanced Video Coding), H.264/MPEG-4 Part 10 or AVC (Advanced Video Coding), ITU H.264/MPEG4-AVC, or equivalent.

### Incorporation by Reference

The following IEEE standards/draft IEEE standards are hereby incorporated herein by reference in their entirety and are made part of the present U.S. Utility Patent Application for all purposes:
1. IEEE Std 802.11™ - 2007, "IEEE Standard for Information technology-Telecommunications and information exchange between systems-Local and metropolitan area networks-Specific requirements; Part 11: Wireless LAN Medium Access Control (MAC) and Physical Layer (PHY) Specifications," IEEE Computer Society, IEEE Std 802.11™-2007, (Revision of IEEE Std 802.11-1999), 1233 pages.
2. IEEE Std 802.11n™ - 2009, "IEEE Standard for Information technology-Telecommunications and information exchange between systems-Local and metropolitan area networks-Specific requirements; Part 11: Wireless LAN Medium Access Control (MAC) and Physical Layer (PHY) Specifications; Amendment 5: Enhancements for Higher Throughput," IEEE Computer Society, IEEE Std 802.11n™-2009, (Amendment to IEEE Std 802.11™ - 2007 as amended by IEEE Std 802.11kTM - 2008, IEEE Std 802.11r™ - 2008, IEEE Std 802.11 y™ - 2008, and IEEE Std 802.11 r™ - 2009), 536 pages.
3. IEEE P802.11ac^{™}/D1.1, August 2011, "Draft STANDARD for Information Technology - Telecommunications and information exchange between systems - Local and metropolitan area networks - Specific requirements, Part 11: Wireless LAN Medium Access Control (MAC) and Physical Layer (PHY) specifications, Amendment 5: Enhancements for Very High Throughput for Operation in Bands below 6 GHz," Prepared by the 802.11 Working Group of the 802 Committee, 297 total pages (pp. i-xxiii, 1-274).

### BACKGROUND OF THE INVENTION

### TECHNICAL FIELD OF THE INVENTION

The invention relates generally to wireless communication systems; and, more particularly, it relates to adaptive video encoding to accommodate video transmission over a packet-based, lossy communication channel.

### DESCRIPTION OF RELATED ART

Many approaches for improving video error robustness/concealment have been proposed, and these approaches can generally be divided into two groups. The first group is related to network layer solutions that attempt to recover the error/packet loss at packet layer, by providing an error free A/V stream to the video decoder. Such solutions usually require redundant codes and retransmissions. The second group is related to video layer solutions, especially post-processing, that will accept a corrupted video stream and try to mitigate gaps and mismatches in the decoded video frames.

As may be understood, both of these groups (network layer solutions and video layer solutions) have their strengths and weaknesses. In particular, a heavily protected network layer might be very robust and resilient to errors, but usually this is accompanied by a reduction in the constant throughput of the channel and/or an increase in the effective latency of the channel. For the video layer, one of the primary considerations is the overall user experience (e.g., the perceptual experience of a user). Video should appear smooth and natural, even under variable network conditions. Under variable channel conditions, providing an acceptable user experience can be particularly challenging for real-time (or near real-time) video streams, as both packet loss and channel delay can have deleterious effects on perceived video quality (e.g., blocking or blurring effects, video freezing or jerkiness, and audio/video synchronization issues).

More particularly, during real-time video encoding and transmission, a packet transmission incremental delay greater than a frame interval might have the same effect as a dropped or lost packet. The video decoder typically needs to decode and present each video frame within a relatively short time period. Consequently, if a packet is delayed too much over the network it might be impossible to complete frame decoding in time for display. If a delayed or dropped frame is also a reference frame for other frames, decoding errors for multiple frames may occur. Particularly in the context of wireless communications, the present art does not provide an adequate means by which communication of media related content may be effectuated in a robust, reliable, and perceptually acceptable manner.

### BRIEF SUMMARY OF THE INVENTION

According to an aspect, a method is provided for adaptively encoding video data for communication over a wireless channel, comprising:
receiving at least one transmitter side indicia of the available throughput of a wireless channel;
generating an estimate of the upcoming throughput of the wireless channel based on the indicia; and
altering at least one encoding parameter in response to the estimate.

Advantageously, the encoding parameter is encoder bit rate.

Advantageously, the indicia of the available throughput of the wireless channel comprises at least one of channel bandwidth information, acknowledgement policy parameters, packetizer parameters, channel load information and a channel gain estimate.

Advantageously, generating an estimate of the upcoming throughput of the wireless channel comprises generating an estimate of the throughput of the wireless channel for a respective plurality of supported modulation and coding schemes (MCSs), each MCS having an associated PHY data rate.

Advantageously, generating an estimate of the throughput of the wireless channel for a respective plurality of supported MCSs is triggered by a change in at least one of the indicia.

Advantageously, generating an estimate of the upcoming throughput of the wireless channel comprises generating a target encoder bit rate for at least one MCS/PHY data rate.

Advantageously, the step of altering at least one encoding parameter comprises comparing a current encoder bit rate to the target encoder bit rate for the at least one MCS/PHY rate when the wireless channel is utilizing or about to utilize the at least one MCS/PHY rate.

Advantageously, the method further comprises lowering the current encoder bit rate if the current encoder bit rate is greater than the target encoder bit rate or increasing the current encoder bit rate if the current encoder bit rate is less than the target encoder bit rate.

Advantageously, the step of generating an estimate of the upcoming throughput of the wireless channel based on the transmitter side indicia further utilizes feedback information from a device receiving the encoded video data over the wireless channel.

Advantageously, the method further comprises:
identifying a new or pending alteration to the at least one encoding parameter; and
scheduling a transition to encoding of the video data utilizing the alteration to the at least one encoding parameter, the transition comprising modifying the encoding and/or transmission of the video data to mitigate the visual impact of the alteration.

Advantageously, the transition comprises modifying the use of intra-frame or inter-frame encoding.

According to an aspect, a method is provided for adaptively encoding a video stream for communication over a wireless channel, comprising:
receiving at least one transmitter side indication of the available throughput of the wireless channel at a first PHY data rate;
utilizing the received indication to generate an estimate of the throughput of the wireless channel at a second PHY data rate;
identifying a transition or pending transition to wireless channel operation at the second PHY data rate; and
altering an encoding parameter of the video stream based on the estimate.

Advantageously, the encoding parameter is encoder bit rate.

Advantageously, altering the encoding bit rate of the video stream occurs prior to video stream communication at the second PHY data rate.

Advantageously, the at least one transmitter side indication of the available throughput of the wireless channel comprises at least one of channel bandwidth information, acknowledgement policy parameters, packetizer parameters, channel load information and a channel gain estimate.

Advantageously, utilizing the received indication to generate an estimate of the throughput of the wireless channel at a second PHY data rate comprises generating a target encoder bit rate for the second PHY data rate, and
wherein the step of altering an encoding parameter of the video stream comprises comparing a current encoder bit rate to the target encoder bit rate when the wireless channel is utilizing or about to utilize the second PHY data rate, and lowering the current encoder bit rate if the current encoder bit rate is greater than the target encoder bit rate.

According to an aspect, an apparatus comprises:
a network interface for supporting video stream transmission over a wireless channel;
an encoder for encoding the video stream for provision to the network interface; and
encoder bit rate adaptation circuitry operable to adaptively adjust an encoding bit rate of the encoder, wherein the encoding bit rate is adjusted based on an estimate of wireless channel throughput derived from at least one transmitter side indication of wireless channel throughput.

Advantageously, the at least one transmitter side indication of wireless channel throughput comprises at least one of channel bandwidth information, acknowledgement policy parameters, packetizer parameters, channel load information and a channel gain estimate.

Advantageously, the estimate of wireless channel throughput is further derived from feedback information from a device receiving the encoded video data over the wireless channel, the feedback information comprising at least one of bit error rate or signal-to-noise ratio data.

Advantageously, the estimate of wireless channel throughput is utilized to generate a target encoder rate, and adaptively adjusting an encoding bit rate of the encoder comprises comparing a current encoder bit rate to the target encoder bit rate and lowering the current encoder bit rate if the current encoder bit rate is greater than the target encoder bit rate.

Advantageously, the apparatus comprises a wireless dongle, the apparatus further comprising a standardized audio/video interface for providing video stream data to the encoder for encoding.

Advantageously, the standardized audio/video interface is compliant with an HDMI standard.

### BRIEF DESCRIPTION OF THE SEVERAL VIEWS OF THE DRAWINGS

**FIG. 1** is a block diagram representation of a video network 100 in accordance with an embodiment of the present invention.
**FIG. 2** is a functional block diagram illustrating encoding and communication of a video stream by a wireless access device in accordance with an embodiment of the present invention.
**FIG. 3** is a functional block diagram illustrating channel throughput estimation and encoder bit rate adjustment in accordance with an embodiment of the present invention.
**FIG. 4** is an operational flow diagram illustrating a method for adaptively encoding video in accordance with an embodiment of the present invention.
**FIG. 5** is a flow diagram illustrating a method for adaptively adjusting an encoder bit rate in accordance with an embodiment of the present invention.
**FIG. 6** is a flow diagram illustrating a method for adaptively adjusting an encoder bit rate based on average transmit queue latency in accordance with an embodiment of the present invention.
**FIG. 7** is a flow diagram illustrating a method for adaptively reducing an encoder bit rate in accordance with an embodiment of the present invention.
**FIG. 8** is a flow diagram illustrating a method for adaptively increasing an encoder bit rate in accordance with an embodiment of the present invention.
**FIG. 9** is a flow diagram illustrating a method for channel condition prediction employing a transmit queuing model in accordance with an embodiment of the present invention.
**FIG. 10** is an illustration of various methods for scheduling transition of a video stream in accordance with embodiments of the present invention.

### DETAILED DESCRIPTION OF THE INVENTION

A novel approach is presented herein for optimizing video transmission over a packet based, lossy communication medium/channel in order to improve the end user experience. The novel approach is related to the combination of predictive estimates of channel conditions and adaptive video encoding so that better error concealment, error resilience and bandwidth usage is achievable during, for example, real-time video encoding for packet network transmission. -

The present invention is generally related to digital video compression, and generally applicable to video compression standards, protocols, and/or recommended practices (e.g., MPEG-4 Part 2, H.264 (AVC), WMV, AVS, RealVideo and Quicktime, among others). While the novel approach presented herein oftentimes employs wireless packet-based transmissions in exemplary embodiments (e.g., UDP/IP), the various aspects and principles, and their equivalents, can also be extended generally to any network transmission (regardless of the particular type of communication medium being employed such as wired, wireless, optical, etc.) over a communication channel that is lossy or variable.

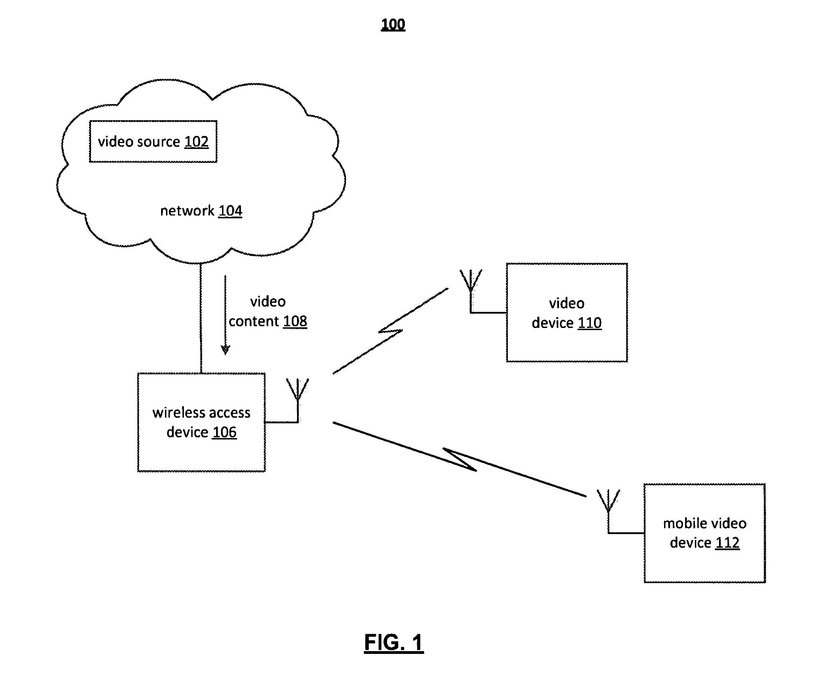

Referring more specifically to the figures, **FIG. 1** is a block diagram representation of a video network 100 in accordance with an embodiment of the present invention. The network 104 distributes information such as video content 108 from a video source 102 to a wireless access device 106 for wireless transmission to wireless video devices, such as video device 110 and mobile video device 112, over one or more wireless channels. The video content 108 can include movies, television shows, commercials or other advertisements, educational content, video gaming content, infomercials, or other program content and optionally additional data associated with such program content including but not limited to digital rights management data, control data, programming information, additional graphics data and other data that can be transferred in association with program content. Video content 108 can include video with or without associated audio content. The video content 108 can be sent as broadcast video, streaming video, video on demand and near video on demand programming and/or other formats.

The network 104 can be a dedicated video distribution network such as a direct broadcast satellite network or cable television network that distributes video content 108 from a plurality of video sources, including video source 102, to a plurality of wireless access devices and, optionally, wired devices over a wide geographic area. Alternatively, network 104 can be a heterogeneous network that includes one or more segments of a general purpose network such as the Internet, a metropolitan area network, wide area network, local area network or other network and optionally other networks such as an Internet protocol (IP) television network. Over various portions of a given network, the video content 108 can be carried as analog and/or digital signals according to various recognized protocols.

Wireless access device 106 can include a base station or access point that provides video content 108 to one or a plurality of video subscribers over a wireless local area network (WLAN) such as an 802.11a,b,g,n, WIMAX or other WLAN network, or a cellular network such as a UMTS, EDGE, 3G, 4G or other cellular data network. In addition, the wireless access device 106 can comprise a home gateway, video distribution point in a dedicated video distribution network or other wireless gateway for wirelessly transmitting video content 108, either alone or in association with other data, signals or services, to video device 110 and/or mobile video device 112.

Mobile video device 112 can include a video enabled wireless smartphone or other handheld communication device that is capable of displaying video content. Video device 110 includes other video display devices that may or may not be mobile including a television coupled to a wireless receiver, a computer with wireless connectivity via a wireless data card, wireless tuner, WLAN modem or other wireless link or device that alone or in combination with other devices is capable of receiving video content 108 from wireless access device 106 and displaying and/or storing the video content 108 for a user.

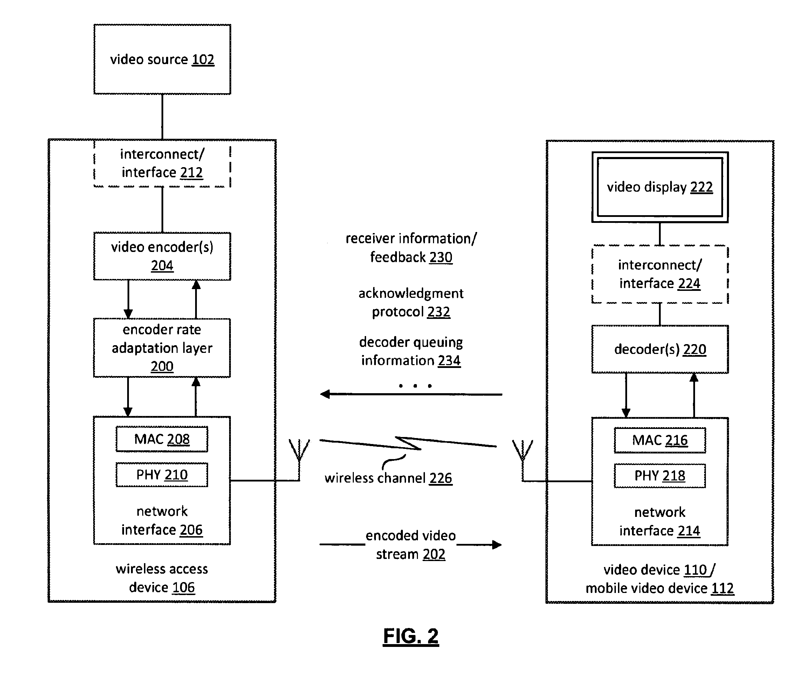

The network 104, wireless access device 106, video device 110 and/or mobile video device 112 include one or more features of the present invention that will be described in greater detail in conjunction with FIGS. 2-5 that follow.

**FIG. 2** is a functional block diagram illustrating encoding and communication of a video stream by a wireless access device in accordance with an embodiment of the present invention. An encoder rate adaptation function or layer 200 is shown that, in combination with or as part of an encoder 204, is used by wireless access device 106 to provide an encoded video stream 202 to a video device 110/mobile video device 112 over a wireless channel 226. Generally speaking, when considering a communication system in which video data is communicated wirelessly from one location, or subsystem, to another, video data encoding may be viewed as being performed at a transmitting side of the wireless channel 226, and video data decoding may generally be viewed as being performed at a receiving side of the wireless channel 226.

In the illustrated embodiment, video content is provided by a video source 102 to the wireless access device 106 for encoding (or further encoding or transcoding) and transmission. The video content 108 may be communicated to the wireless access device 106 by various means/networks such as those described above. In one embodiment, the video source 102 comprises a gaming console, cable or satellite set top box, media server or the like that is coupled to the wireless access device 106 by a standardized interconnect/interface 212. The standardized interconnect/interface 212 may comprise, for example, an audio/video cable such as an HDMI cable (in which case the wireless access device 106 may take the form of a wireless dongle), a high bandwidth wireless link (e.g., a WiGig or WirelessHD compliant link) capable of transmitting uncompressed, standard or high definition video content, or various combinations of such technologies.

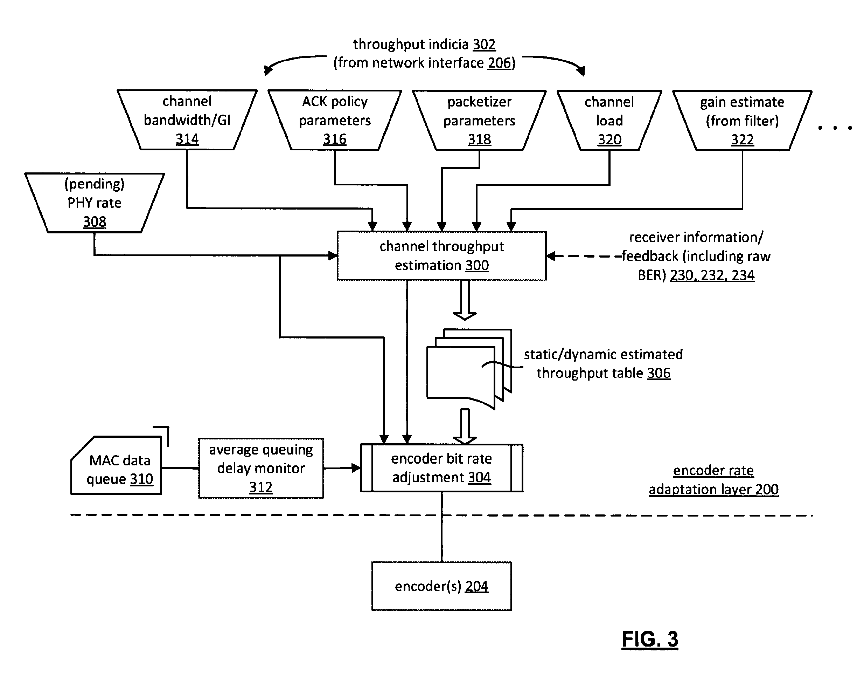

Wireless access device 106 includes a video encoder(s) 204 that receives and encodes video content for transmission (in the form of encoded video stream 202) by network interface 206 over wireless channel 226. As described more fully below with reference to **FIG. 3**, an encoder rate adaptation layer 200 communicates with the video encoder(s) 204, including signals for adaptively altering the encoding bit rate and/or other operative parameters of the video encoder(s) 204. The encoder rate adaptation layer 200 is also capable of receiving information from the network interface 206. Such information can be used by the encoder rate adaptation layer 200 to generate estimates of the throughput of the wireless channel 226 under varying conditions in accordance with present invention.

Encoded video content from the encoder 204 is provided to network interface 206 for transmission to video device 110/mobile video device 112 (hereinafter referred to collectively or in the alternative as video device 110). In the disclosed embodiment, the network interface 206 includes medium access control (MAC) 208 and physical layer (PHY) 210 circuitry or functionality. A main purpose of the MAC 208 is to allocate the bandwidth of the wireless channel 226 and coordinate access when multiple video devices 110/112 or similar are sharing the channel. Among other functions, the PHY 210 establishes and terminates connections to the wireless channel 226. In the disclosed embodiment, PHY 210 generates and transmits modulated RF signals containing the encoded video stream 202 over the wireless channel 226. As noted, the MAC 208 and PHY 210 may operate in accordance with a wide variety of packet based communication protocols, such as an IEEE 802.11 compliant network.

In the illustrated video device 110, a network interface 214 receives RF signals (over the wireless channel 202) containing the encoded video stream 202. The PHY 218, in cooperation with the MAC 216, then demodulates and down converts these RF signals to extract the encoded video stream 202. In turn, the decoder 220 operates on video data from the extracted video stream 202 to generate a decoded video stream for display on a video display 222.

An optional interconnect/interface 224 (including, for example, the various embodiments disclosed above in conjunction with interconnect/interface 212) may be utilized to provide decoded video content to, for example, a high definition television or projection system. In such embodiments, as well as other embodiments, the video display 222 may be part of or a separate component from the video device 110. Further, the video device 110 may function as relay to other (mobile) video devices.

The network interface 214 of the disclosed embodiment also provides various transmissions to the wireless access device 106 including, for example, signaling in accordance with an acknowledgement (ACK/NACK) protocol 232, status information relating to the operation of the PHY 218 (for example, bit error rate before error correction or a signal-to-noise ratio (SNR)), and decoder queuing information 234. Such receiver information/feedback 230, in conjunction with transmitter side channel throughput indicia 302, may be utilized to generate estimates of current and/or expected channel throughputs under a variety of operating conditions.

Hereinafter, the terms "ACK", "acknowledgement", and "BA" are all meant to be inclusive of either ACK or BA (block acknowledgement) and equivalents. For example, even if only one of ACK or BA is specifically referenced, such embodiments may be equally adapted to any of ACK or BA and equivalents. One of the benefits of video encoding in accordance with the present invention may be a significant reduction in number of NACKs received by the wireless access device 106. It is noted, however, that ACKs may not provide an immediate indication of channel conditions when, for example, an ACK is the result of successful error correction on the receiving side of the wireless channel 226.

Video encoder 204 and encoder rate adaptation layer 200 can be implemented in hardware, software or firmware. In particular embodiments, the video encoder 204 and encoder rate adaptation layer 200 can be implemented using one or more microprocessors, microcomputers, central processing units, field programmable logic devices, state machines, logic circuits, analog circuits, digital circuits, and/or any devices that manipulate signals (analog and/or digital) based on operational instructions that are stored in a memory module. The function, steps and processes performed by video encoder 204 or encoder rate adaptation layer 200 can be split between different devices to provide greater computational speed and/or efficiency. The associated memory module may be a single memory device or a plurality of memory devices. Such a memory device may be a read-only memory, random access memory, volatile memory, non-volatile memory, static random access memory (SRAM), dynamic random access memory (DRAM), flash memory, cache memory, and/or any device that stores digital information. Note that when the video encoder 204 and/or encoder rate adaptation layer 200 implement one or more of its functions via a state machine, analog circuitry, digital circuitry, and/or logic circuitry, the memory module storing the corresponding operational instructions may be embedded within, or external to, the circuitry comprising the state machine, analog circuitry, digital circuitry, and/or logic circuitry.

Further, within each of the wireless access device 106 and video device 110/mobile video device 112, any desired integration or combination may be implemented for the various components, blocks, functional blocks, circuitries, etc. therein, and other boundaries and groupings may alternatively be performed without departing from the scope and spirit of the invention. For example, all components within the network interface 206 may be included within a first processing module or integrated circuit, and all components within the network interface 214 may be included within a second processing module or integrated circuit. Likewise, while shown as separate from video source 102, encoder(s) 204 and encoder rate adaptation layer 200 could be incorporated into video source 102 or other network element of network 100. Further, all or portions of the encoder rate adaptation layer 200 may be incorporated into the encoder 204.

**FIG. 3** is a functional block diagram illustrating channel throughput estimation and encoder bit rate adjustment in accordance with an embodiment of the present invention. In the disclosed embodiment, the encoder rate adaptation layer 200 operates to adaptively effect alterations in the encoding parameters of the encoder 204 in response to estimates of wireless channel throughput based on at least one throughput indicia 302. The combination of predictive estimates of channel conditions and adaptive video encoding result in improved error concealment, error resilience, ability to meet wireless latency requirements, and bandwidth usage during, for example, real-time video encoding for packet network transmission.

As noted, packet-based networks can provide high throughput, but often cannot guarantee a combination of low transmission delays, constant throughput and a low level of net data losses under "noisy" channel conditions. Channel conditions can be influenced by a variety of factors, including signal strength, pattern noise (e.g., microwave bursts), interference from other carriers, and network congestion on specific nodes. Transient impulse noise can also have a short term detrimental effect on the available bandwidth of a wireless channel. To the extent practical, it may be advantageous to account for such impulse noise in order to minimize unnecessary adjustments to encoding parameters.

The term channel throughput is used generally herein to refer to an average useful bit rate (including link layer protocol overhead) over the wireless channel 226. For real time streams such as video, relevant throughput values may be subject to latency constraints (effectively isochronous throughput) and have typical values that are less than total throughput. Although throughput is typically measured in bits per second (bps) or megabits per second (Mbps), data packets per second or data packets per time interval may also be used. Many factors (as generally represented by throughput indicia 302 and receiver information 330) may impact channel throughput and/or be utilized in accordance with the present invention to generate an indication of channel throughput. Such factors include PHY characteristics (e.g., operational frequency/band), the selected modulation and coding scheme (MCS), the size of the MAC protocol data units (MPDUs) and the use of packet aggregation, supported PHY rates of the transmission protocol, channel bandwidth (e.g., 20/40MHz), guard intervals (GIs), the relevant transmission acknowledgment policy (e.g., Normal ACK/NACK, B-ACK (Block Acknowledgment) or aggregated acknowledgment, No-ACK), average size of the data (e.g., MPDUs) in an encoded stream, channel load, the number of transmit streams, etc. Such channel/transmission characteristics could further include a raw bit error rate, packet error rate, power mode information, signal-to-noise ratio (SNR), packet retransmission rate, and various reception parameters or other metrics that describe the ability of the RF channel to effectively send the encoded video stream 202 to the video device 110. Channel throughput estimation in accordance with various embodiments of the present invention may utilize one or more indicia of the above channel characteristics. Use of a relatively large number of indicia may increase the precision of the channel throughput estimation model.

In the illustrated encoder rate adaptation layer 200, various throughput indicia 302 are congregated and analyzed by a channel throughput estimation 300 function. The channel throughput estimation 300 utilizes the received throughput indicia 302 to generate channel throughput estimations. Such estimations may include, for example, expected supportable throughputs for a plurality of supported PHY data rates (PHY rate), or a revised throughput estimation for a given PHY rate based on changes in the throughput indicia 302. Output from the channel throughput estimation 300 process is provided to encoder bit rate adjustment 304 functionality for use in adaptively altering one or more encoding parameters (e.g., bit rate) of the encoder 204.

Throughput indicia 302 may include status information relating to one or more of channel bandwidth/GI 314, acknowledgment policy parameters 316, packetizer parameters 318, channel load 320, gain estimate 322 from, for example, a multivariable common filter, etc. Although useful estimation is possible by utilizing a relatively small set of inputs such as those listed above, use of a larger number of inputs may generally increase precision of the model.

While the illustrated throughput indicia 302 are generally available from network interface 206 itself, channel estimation according to certain embodiments may also utilize various receiver information/feedback 330. For example, raw bit error rate information or other short term feedback from a receiving device(s) (such as video device 110 or mobile video device 112) could be used in the channel throughput estimation 300 process. Information from the receiving device can be communicated, for example, in periodic action frames or through other frame types/subtypes.

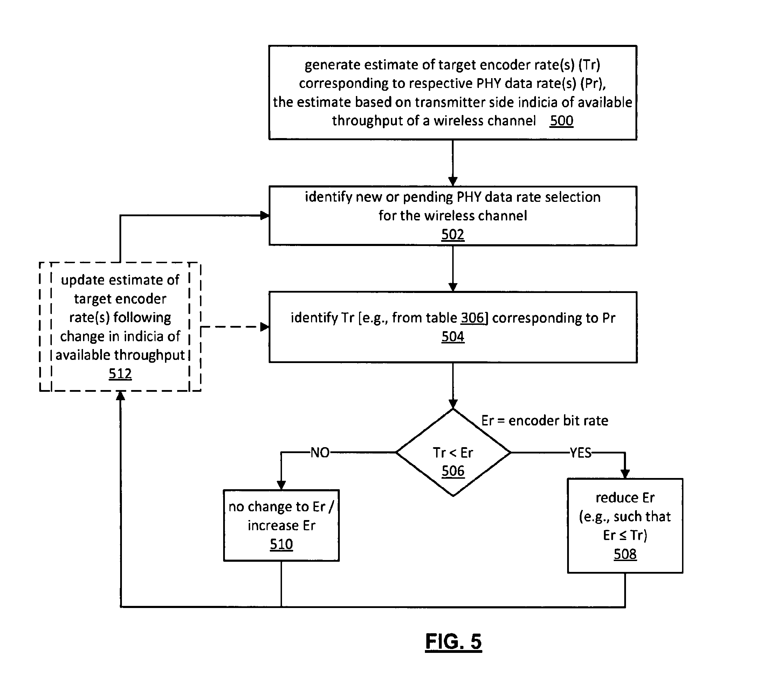

In the illustrated embodiment of **FIG. 3**, an average queuing delay monitor 312 is optionally included to provide transmit queue delay information from a MAC data queue 310 to encoder bit rate adjustment 304. As will be appreciated with reference to the exemplary embodiments of **FIGS. 5-9**, the transmit queue delay information can be used separately or in conjunction with the throughput indicia 302, receiver information/feedback 330, estimated throughput table 306 and/or PHY rate 308 to adaptively adjust one or more encoding parameters (e.g., bit rate) of the encoder 204.

Encoder bit rate adjustment 304 in accordance with the illustrated embodiment may utilize one or more estimated throughput table(s) 306 generated by the channel throughput estimation 300 process. An exemplary estimated throughput table 306 (**Table 1**) is shown below. In this embodiment, estimated target throughput rates (Tr) are calculated for a variety of modulation and coding schemes (MCSs) supported by the wireless access device 106. Supported MCSs may comprise all or a subset of MCSs specified by a given communication standard (e.g., IEEE 802.11n). The value of an estimated Tr corresponding to a particular MCS generally reflects an estimated upper limit for the throughput rate of the wireless channel 226, with a possible reduction(s) for desensitization purposes, and is generally less than the relevant associated maximum PHY rate. Tr values may be influenced by a number of throughput indicia 302, including but not limited to channel bandwidth, ACK policy, aggregation parameters, channel load (possibly including channel load measured by an associated BSS), etc.

**Table 1. Estimated Throughput Table**

| **MCS** | **ESTIMATED TARGET THROUGHPUT RATE (Tr)** |
|---|---|
| *0* | 10 Mbps |
| *1* | 20 Mbps |
| *2* | 30 Mbps |
| *3* | 40 Mbps |
| *4* | 55 Mbps |
| *5* | 65 Mbps |
| *6* | 68 Mbps |
| *7* | 70 Mbps |
| *8* | 22 Mbps |
| *9* | 40 Mbps |
| *10* | 52 Mbps |
| *11* | 62 Mbps |
| *12* | 68 Mbps |
| *13* | 100+ Mbps |
| *14* | 100+ Mbps |
| *15* | 100+ Mbps |

In the embodiment of **FIG. 3**, the estimated throughput table 306 or equivalent may be a static table in which the throughput indicia 302 and/or receiver feedback 330 relied upon to construct the table are held to fixed values, or a dynamic table that is refreshed following a change in one or more throughput indicia 302. Events that trigger a refresh in the Tr values of the estimated throughput table 306 could include, for example, one or more of the following: enablement/disablement of MPDU aggregation; a change in the maximum number of aggregates or aggregation density; a new or revised acknowledgement policy (e.g., new block acknowledgement window size); changes in operational frequency/band; a new channel bandwidth (e.g., 20/40 MHz) and/or guard interval; variations in the average size of the data (MPDU) of the encoded video stream 202; fluctuations in channel load or the number of transmit streams; etc. The estimated throughput table 306 may be utilized by encoder bit rate adjustment 304 to cause one or more adjustments, including incremental or stepwise adjustments, to the encoding bit rate of encoder 204 such that it more closely supports the estimated target throughput rates (Tr) associated with a current or anticipated PHY rate/MCS value. The PHY rate may be adaptively selected by a PHY rate selection algorithm/process (not separately illustrated). An exemplary embodiment of encoder bit rate adjustment utilizing an estimated throughput table 306 is described in conjunction with **FIG. 5**.

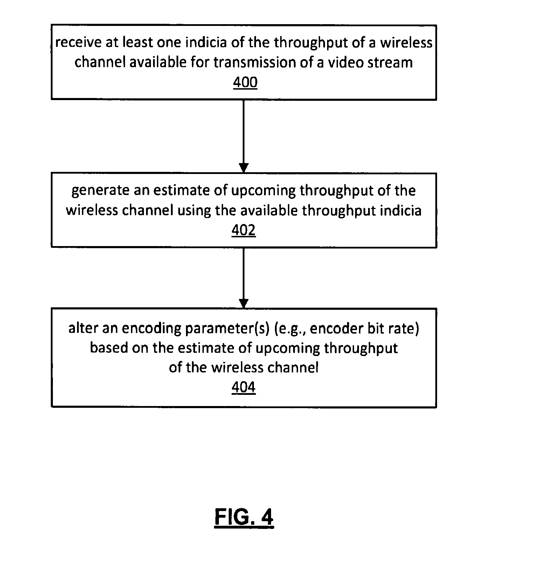

FIG. 4 is an operational flow diagram in accordance with an embodiment of the present invention illustrating a method for adaptively encoding a video stream for transmission over a wireless channel. As shown in step 400, the method comprises receiving at least one indicia of the throughput of a wireless channel that is available for the pending or continuing transmission of video stream. Next, in step 402, one or more estimates of the upcoming throughput of the wireless channel are generated based, at least in part, on the received throughput indicia. In turn, the estimate of upcoming throughput is utilized in step 404 to adjust an encoding parameter of the encoder for the video stream. The encoding parameter may comprise, for example, an encoding bit rate or frame rate that is altered in order to better match expected channel throughput under a variety of operating conditions and PHY rates. In the case of frame rate alterations, consideration of other encoder parameters may improve results. Although various embodiments according to the invention are disclosed herein, variations thereof and other alternate embodiments and equivalents may be performed without departing from the scope and spirit of the invention.

Referring now to **FIG. 5**, a method is illustrated for adaptively adjusting an encoder bit rate for a video stream in accordance with an embodiment of the present invention. As shown in step 500, transmitter side indicia of available throughput of a wireless channel are used to generate one or more target encoder rates (Tr), each Tr value corresponding to a supported PHY data rate selection for the wireless channel. Multiple Tr values may be tabulated, for example in an estimated throughput table 306, for immediate access by encoder bit rate adjustment functionality.

Following detection of a new or pending PHY data rate (Pr)/MCS selection for the wireless channel in step 502 (e.g., in accordance with a standardized communication protocol or separate PHY data rate selection process), the method continues in step 504 and an estimated target encoder rate Tr is identified for the subject Pr value. Note that step 502 may be omitted following an initial determination of Tr values. As shown in step 506, the method next compares the identified Tr value to the current encoder bit rate (Er) (calculated in Mbps in the illustrated embodiment).

If the current encoder bit rate Er is greater than the Tr value, the encoder bit rate is reduced in step 508, thereby effectively increasing the compression ratio of the video stream in order to improve utilization of the anticipated throughput of the wireless channel. Reduction of encoder bit rate may occur in one or more adjustments, including incremental or stepwise adjustments.

If the current encoder bit rate Er is not greater than the Tr value as determined in step 506, the encoder bit rate is left unchanged or, alternatively, increased as shown in step 510. An increase in encoder bit rate to better approximate the Tr value will effectively decrease the compression ratio of the video stream, ordinarily resulting in improved utilization of any excess available throughput in the wireless channel.

Increases in encoder bit rate may occur in one or more adjustments, including incremental or stepwise adjustments. Anticipation of channel deterioration and/or prospective PHY rates in accordance with the invention may be advantageously employed, for example, to modify an encoder bit rate prior to an actual change in PHY data rate, thereby potentially avoiding excessive buffering of video data.

In one embodiment according to the present invention, the estimated throughput table 306 or equivalent is computed dynamically as shown generally by step 512. In step 512, which may occur at other points in the illustrated method, estimated target encoder rates are refreshed following a change in one or more throughput indicia 302 as described above in conjunction with FIG. 3. In the disclosed embodiment, step 504 is repeated following an update to Tr value(s) in step 512. In this embodiment, adjustments to an encoder bit rate can thus occur following a new or pending PHY data rate selection, or a change in indicia of available throughput.

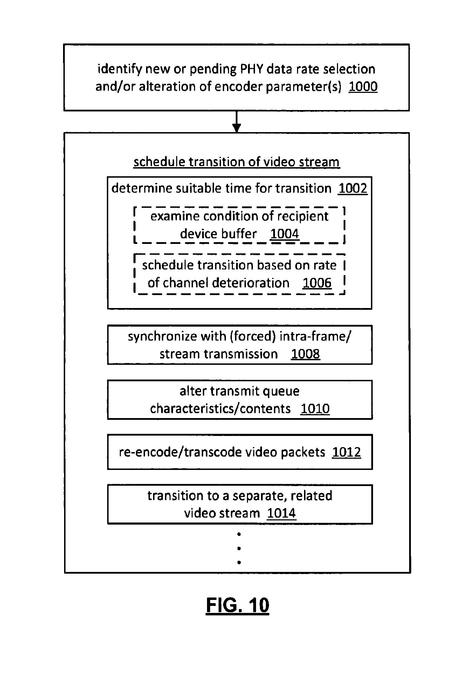

In addition to or in lieu of encoder bit rate parameters, estimated channel throughput information may be used to adjust other video encoding parameters, such frame rate or use of different frame types. For example, the use of intra-frame prediction in the video coding process might be restricted for estimated channel throughputs or expected PHY data rates below a certain threshold. For such estimated channel throughputs or PHY data rates, the video encoder could be instructed to make greater use of inter-frame prediction in order to improve channel utilization. Additional such embodiments are described below in conjunction with **FIG. 10**.

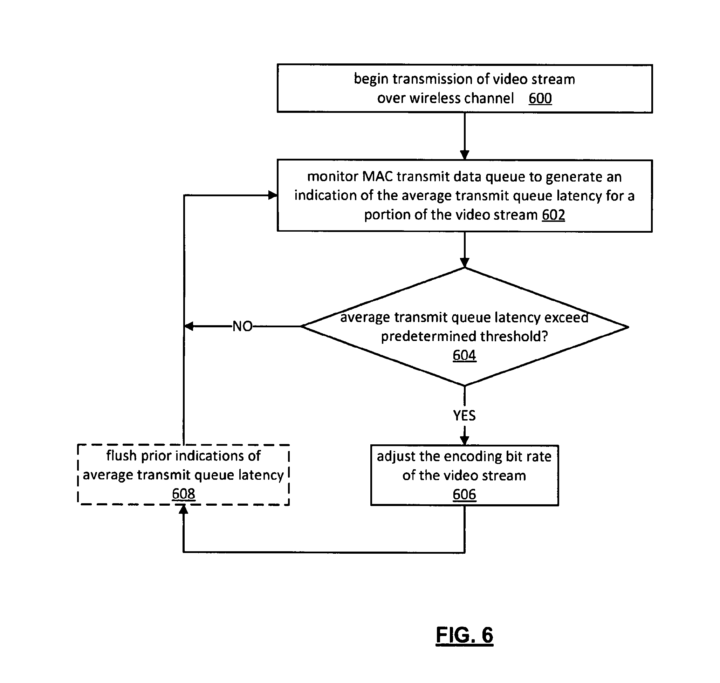

**FIG. 6** illustrates an embodiment of a method for adaptively adjusting an encoder bit rate based on average transmit queue latency in accordance with an embodiment of the present invention. The disclosed method is utilized during the transmission of a video stream having a relatively constant encoded bit rate (step 600). During transmission of such video streams, the MAC transmit queue depth/latency of the transmitting device will often increase in response to deteriorating channel capacity. Although the illustrated method operates on a single video stream, the method is similarly applicable to the transmission of multiple video streams to one or more receiving devices. In such embodiments, transmit queue depth may be tracked on a per stream basis and/or per device basis. Further, the method of **FIG. 6** may be utilized separately and/or in combination with other adaptive encoding methods and systems, including the novel methods disclosed above.

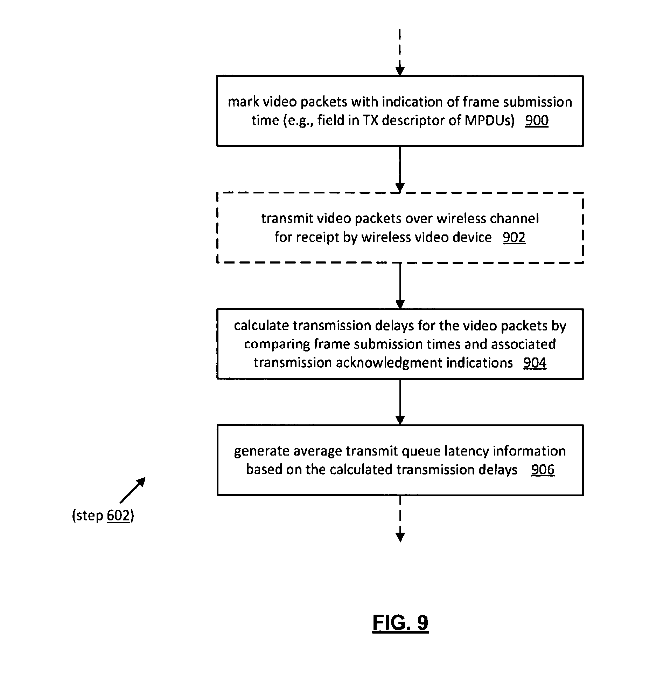

Referring now to step 602, the MAC transmit data queue is monitored for purposes of generating/maintaining an indication of the average transmit queue latency for a portion of the video stream. An exemplary embodiment of step 602 is illustrated in **FIG. 9**. Next, in step 604, the average transmit queue latency (or indication thereof) is compared to a predetermined threshold. The predetermined threshold may reflect, for example, a maximum tolerable queue depth beyond which video data is likely to be lost or unacceptably delayed under certain channel conditions. Similarly, the predetermined threshold may reflect a minimum tolerable queue depth (possibly indicating wireless channel throughput underutilization) or average tolerable queue depth.

If the average transmit queue latency exceeds the predetermined threshold as determined in step 604, the encoding bit rate (or related encoding parameter) is adjusted in step 606. For example, the encoding bit rate may be lowered or raised as necessary to decrease or increase the transmit queue depth to a desired level. If the average transmit queue latency does not exceed the predetermined threshold as determined in step 604, or following step 606, the method returns to step 602 for continued monitoring of the transmit data queue.

In one embodiment of the method, prior indication(s) of average transmit queue latency are optionally flushed in step 608 if the encoding bit rate of the video stream is adjusted, including in step 606. It is contemplated that step 608 may also be triggered, for example, by changes in transmitter side channel throughput indicia and/or feedback from a device receiving the video stream.

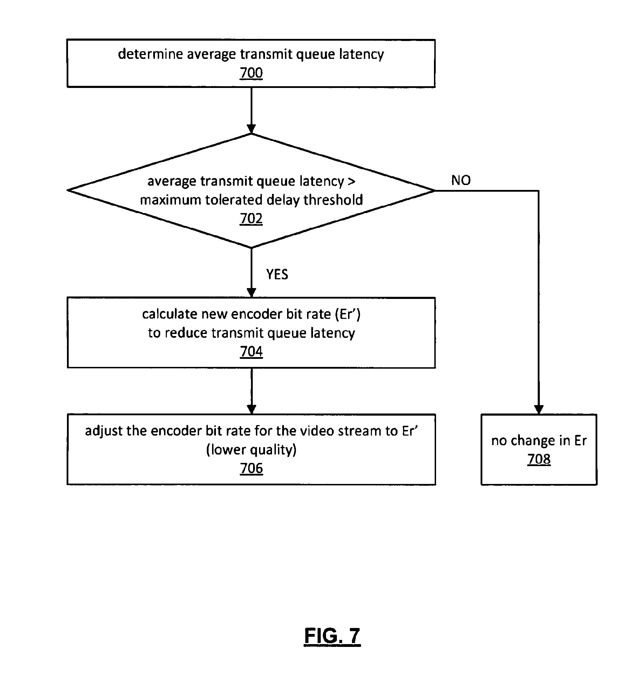

FIG. 7 is a flow diagram illustrating a method for adaptively reducing an encoder bit rate in accordance with an embodiment of the present invention. As shown in step 700, an average transmit queue latency value is first determined. Next, in step 702, this value is compared to a predetermined maximum tolerated delay threshold.

If the average transmit queue latency value is less than the predetermined maximum tolerated delay threshold, no resultant adjustments are made to the encoder bit rate (Er) as shown in step 708. If the average transmit queue latency value is found to exceed the predetermined maximum tolerated delay threshold, the method continues by calculating (or retrieving, in the case of predetermined Er data) a new encoder bit rate (Er') that is likely to result in reduced transmit queue latency. Subsequently, in step 706, the encoder bit rate for the video stream is adjusted to match the new encoder bit rate Er', effectively lowering the bit rate of the video stream for purposes of reducing the average transmit queue latency.

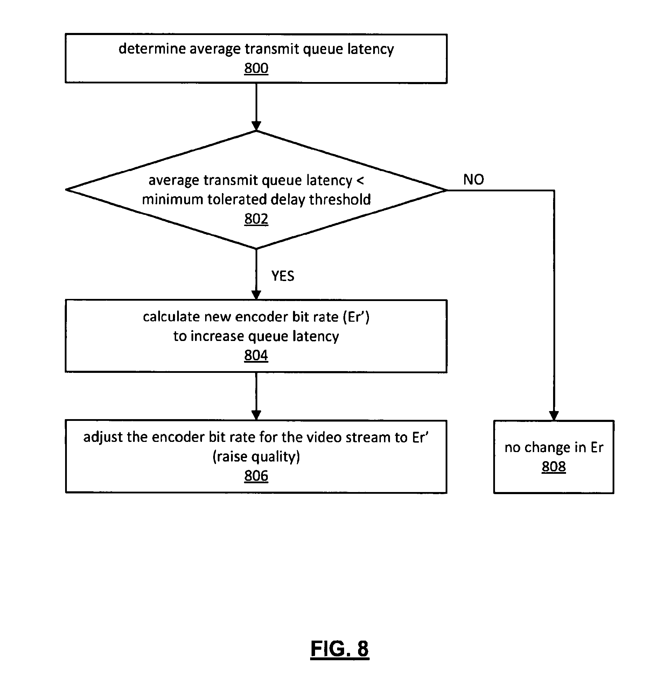

**FIG. 8** is a flow diagram illustrating a method for adaptively increasing an encoder bit rate in accordance with an embodiment of the present invention. As shown in step 800, an average transmit queue latency value is first determined. Next, in step 802, this value is compared to a predetermined minimum tolerated delay threshold.

If the average transmit queue latency value is greater than the predetermined minimum tolerated delay threshold, no resultant adjustments are made to the encoder bit rate (Er) as shown in step 808. If the average transmit queue latency value is found to be less than the predetermined minimum tolerated delay threshold, the method continues by calculating (or retrieving, in the case of predetermined Er data) a new encoder bit rate (Er') that is likely to result in increased transmit queue latency. Subsequently, in step 806, the encoder bit rate for the video stream is adjusted to match the new encoder bit rate Er', effectively increasing the bit rate of the encoded video, improving the typical quality of the video stream, and increasing the average transmit queue latency in order to more fully utilize the bandwidth of the associated wireless channel.

The value of Er' in the methods of **FIGS. 7** **and** **8** may be selected, for example, in an effort to match the transmit queue latency with an "average tolerable delay" threshold that is between the maximum and minimum tolerable queue delay thresholds. In addition, statistics for average transmit queue latency may be maintained on a per access category basis and/or by traffic ID or equivalents. Further, in order to minimize the possibility or frequency of application-rate-oscillations, the disclosed methods may be implemented such that alterations to an encoding parameter are only permitted on a periodic basis.

**FIG. 9** is a flow diagram illustrating a method for channel condition estimation employing a transmit queuing model in accordance with an embodiment of the present invention. The illustrated method may be utilized, for example, in an exemplary embodiment of step 602 (monitoring a MAC transmit data queue to generate an indication of the average transmit queue latency for a portion of a video stream).

Referring first to step 900, individual or aggregated video packets in an encoded video stream are marked with an indication of the time at which the respective packets are generated or submitted for transmission over a wireless channel. In one embodiment, for example, MAC protocol data units (MPDUs) or the like are marked with an additional field in the transmit descriptor portion of the header in order track frame submission time. The frame submission time is utilized to calculate the delay between the frame submission and completion/acknowledgement of transmission (including, for example, inter-frame-spacing, any retransmission time, B/ACK duration, and protection duration).

Video packets, including marked video packets, are next transmitted over a wireless channel for receipt by a video device in step 902. Next, the method resumes in step 904, and transmission delays for the marked video packets are calculated by comparing frame submission times and associated transmission acknowledgement indications. The calculated transmission delays are subsequently used in step 906 to generate and/or maintain average transmit queue latency information relating to one or more video streams. A delay value may be automatically assigned for packets which are not successfully delivered (e.g., no acknowledgement is received prior to packet expiration or following a maximum number of retransmission attempts). The delay value may correspond, for example, to an associated media frame duration.

In addition to adaptive encoder rate adjustment and the alternate embodiments of the invention described above (e.g., alteration of frame rate or the use/frequency of predictive frames), it is contemplated that channel throughput estimation according to the present invention may be used for additional or alternate purposes. By way of example, channel throughput estimation according to the invention may be utilized to govern or modify wireless quality of service (QoS) parameters, employment of CDMA or other coding overhead, schedule changes to decoder configuration (e.g., following a change in encoder bit rate or use of predictive frames), restrict the use of inter/intra-frame prediction in the video coding process, adaptively alter display mode configurations, etc.

Referring now to **FIG. 10**, various exemplary methods are illustrated for scheduling transition of a video stream in response to, for example, a pending change in encoder bit rate. Such scheduling may be employed to minimize the visual impact of modifications to encoding parameters, transmission parameters, etc. In the illustrated embodiments, scheduling operations are employed following identification (step 1000) of a new or pending PHY data rate selection and/or alteration of encoder parameter(s). Step 1000 may alternatively comprise a separate examination of fixed and/or variable thresholds such as those described herein.

If time permits, scheduling transition of a video stream may involve an evaluation of various available delivery approaches and configurations such as those described below. Alternatively, transitions may be scheduled immediately, and may involve identification of previously transmitted video packets that should be discarded (assuming the relevant decoder is not capable of making such determinations).

Referring more specifically to step 1002, the transmitting device (possibly in conjunction with a recipient device) determines a suitable time or position in the pertinent video stream for scheduling a transition. As illustrated in blocks 1004 and 1006, such scheduling may involve an examination of a recipient device buffer and/or be based, at least in part, on the rate of channel deterioration/improvement.

Scheduled transitioning of a video stream to address changes in operating conditions may be accomplished by a variety of methods or combination of methods, such as those illustrated by blocks 1008, 1010, 1012 and 1014. In the exemplary embodiment of block 1008, transitioning of a video stream involves selectively transmitting or forcing intra-frames/streams to a recipient device in an attempt to improve the decoding process when, for example, a temporary disruption(s) in the video stream may result from alteration in the encoding process, transmission parameters, etc. It is noted that switching between intra-prediction and inter-prediction may be performed generally in accordance with a step function. In other embodiments, switching between these respective operational modes may be performed incrementally through a series of step-wise, gradual changes in order to achieve a desired level of the smoothness in the transition. Various exemplary approaches for switching between operational modes are described in certain of the documents incorporated by reference herein.

In other embodiments, decoding functionality of a recipient device may be instructed to propagate the last received intra-frame until the next intra-frame is received, or commence other available error concealment actions. Alternatively, or in combination, the transmitting device may retransmit a select portion(s) of the video stream. In such an embodiment, decoding functionality of the recipient device may further preferentially drop certain received portions of the video stream (e.g., in order to mitigate possible propagation of decoding errors that might otherwise occur during a transition) or undertake other available error concealment actions.

As shown in block 1010, scheduled transitioning of a video stream may comprise alterations to the characteristics and/or contents of a transmit queue of the transmitting device. For example, transmission of queued video packets may be temporarily suspended. Alternatively, certain video packets (such as those corresponding to intraframes) may be identified for retransmission, possibly in lieu of other video packets in the transmission queue.

In the embodiment of block 1012, transitioning of a video stream may involve re-encoding or transcoding video packets for transmission during the transition period. By way of example, select motion compensation information in the encoded video stream may be re-encoded or transcoded to compensate for packets that might be lost, dropped or delayed.

In yet another embodiment, illustrated by block 1014, the transition process may involve transmission of a separate video stream that is related to the source video for the incumbent or default video stream. This separate video stream may comprise, for example, relevant portions of the source video that are encoded at a higher or lower resolution than the incumbent video stream.

It is noted that the various modules and/or circuitries (e.g., encoding modules and/or circuitries, decoding modules and/or circuitries, encoder rate adaptation modules and/or circuitries, etc.) described herein may be a single processing device or a plurality of processing devices. Such a processing device may be a microprocessor, micro-controller, digital signal processor, microcomputer, central processing unit, field programmable gate array, programmable logic device, state machine, logic circuitry, analog circuitry, digital circuitry, and/or any device that manipulates signals (analog and/or digital) based on operational instructions. The operational instructions may be stored in a memory. The memory may be a single memory device or a plurality of memory devices. Such a memory device may be a read-only memory (ROM), random access memory (RAM), volatile memory, non-volatile memory, static memory, dynamic memory, flash memory, and/or any device that stores digital information. It is also noted that when the processing module implements one or more of its functions via a state machine, analog circuitry, digital circuitry, and/or logic circuitry, the memory storing the corresponding operational instructions may be embedded with the circuitry comprising the state machine, analog circuitry, digital circuitry, and/or logic circuitry. In such an embodiment, a memory stores, and a processing module coupled thereto executes, operational instructions corresponding to at least some of the steps and/or functions illustrated and/or described herein.

It is also noted that any of the connections or couplings between the various modules, circuits, functional blocks, components, devices, etc. within any of the various diagrams or as described herein may be differently implemented in different embodiments. For example, in one embodiment, such connections or couplings may be direct connections or direct couplings there between. In another embodiment, such connections or couplings may be indirect connections or indirect couplings there between (e.g., with one or more intervening components there between). Of course, certain other embodiments may have some combinations of such connections or couplings therein such that some of the connections or couplings are direct, while others are indirect. Different implementations may be employed for effectuating communicative coupling between modules, circuits, functional blocks, components, devices, etc. without departing from the scope and spirit of the invention.

Various aspects of the present invention have also been described above with the aid of method steps illustrating the performance of specified functions and relationships thereof. The boundaries and sequence of these functional building blocks and method steps have been arbitrarily defined herein for convenience of description. Alternate boundaries and sequences can be defined so long as the specified functions and relationships are appropriately performed. Any such alternate boundaries or sequences are thus within the scope and spirit of the claimed invention.

Various aspects of the present invention have been described above with the aid of functional building blocks illustrating the performance of certain significant functions. The boundaries of these functional building blocks have been arbitrarily defined for convenience of description. Alternate boundaries could be defined as long as the certain significant functions are appropriately performed. Similarly, flow diagram blocks may also have been arbitrarily defined herein to illustrate certain significant functionality. To the extent used, the flow diagram block boundaries and sequence could have been defined otherwise and still perform the certain significant functionality. Such alternate definitions of both functional building blocks and flow diagram blocks and sequences are thus within the scope and spirit of the claimed invention.

One of average skill in the art will also recognize that the functional building blocks, and other illustrative blocks, modules and components herein, can be implemented as illustrated or by discrete components, application specific integrated circuits, processors executing appropriate software and the like or any combination thereof.

Moreover, although described in detail for purposes of clarity and understanding by way of the aforementioned embodiments, various aspects of the present invention are not limited to such embodiments. It will be obvious to one of average skill in the art that various changes and modifications may be practiced within the spirit and scope of the invention, as limited only by the scope of the appended claims.

## Claims

1. A method for adaptively encoding video data for communication over a wireless channel, comprising:
receiving at least one transmitter side indicia of the available throughput of a wireless channel;
generating an estimate of the upcoming throughput of the wireless channel based on the indicia; and
altering at least one encoding parameter in response to the estimate.

2. The method of claim 1, wherein the encoding parameter is encoder bit rate.

3. The method of claim 1, wherein the indicia of the available throughput of the wireless channel comprises at least one of channel bandwidth information, acknowledgement policy parameters, packetizer parameters, channel load information and a channel gain estimate.

4. The method of claim 3, wherein generating an estimate of the upcoming throughput of the wireless channel comprises generating an estimate of the throughput of the wireless channel for a respective plurality of supported modulation and coding schemes (MCSs), each MCS having an associated PHY data rate.

5. The method of claim 4, wherein generating an estimate of the throughput of the wireless channel for a respective plurality of supported MCSs is triggered by a change in at least one of the indicia.

6. The method of claim 4, wherein generating an estimate of the upcoming throughput of the wireless channel comprises generating a target encoder bit rate for at least one MCS/PHY data rate.

7. The method of claim 6, wherein the step of altering at least one encoding parameter comprises comparing a current encoder bit rate to the target encoder bit rate for the at least one MCS/PHY rate when the wireless channel is utilizing or about to utilize the at least one MCS/PHY rate.

8. The method of claim 7, further comprising lowering the current encoder bit rate if the current encoder bit rate is greater than the target encoder bit rate or increasing the current encoder bit rate if the current encoder bit rate is less than the target encoder bit rate.

9. The method of claim 1, wherein the step of generating an estimate of the upcoming throughput of the wireless channel based on the transmitter side indicia further utilizes feedback information from a device receiving the encoded video data over the wireless channel.

10. The method of claim 1, further comprising:
identifying a new or pending alteration to the at least one encoding parameter; and
scheduling a transition to encoding of the video data utilizing the alteration to the at least one encoding parameter, the transition comprising modifying the encoding and/or transmission of the video data to mitigate the visual impact of the alteration.

11. The method of claim 10, wherein the transition comprises modifying the use of intra-frame or inter-frame encoding.

12. A method for adaptively encoding a video stream for communication over a wireless channel, comprising:
receiving at least one transmitter side indication of the available throughput of the wireless channel at a first PHY data rate;
utilizing the received indication to generate an estimate of the throughput of the wireless channel at a second PHY data rate;
identifying a transition or pending transition to wireless channel operation at the second PHY data rate; and
altering an encoding parameter of the video stream based on the estimate.

13. An apparatus, comprising:
a network interface for supporting video stream transmission over a wireless channel;
an encoder for encoding the video stream for provision to the network interface; and
encoder bit rate adaptation circuitry operable to adaptively adjust an encoding bit rate of the encoder, wherein the encoding bit rate is adjusted based on an estimate of wireless channel throughput derived from at least one transmitter side indication of wireless channel throughput.

14. The apparatus of claim 13, wherein the at least one transmitter side indication of wireless channel throughput comprises at least one of channel bandwidth information, acknowledgement policy parameters, packetizer parameters, channel load information and a channel gain estimate.

15. The apparatus of claim 14, wherein the estimate of wireless channel throughput is further derived from feedback information from a device receiving the encoded video data over the wireless channel, the feedback information comprising at least one of bit error rate or signal-to-noise ratio data.
